Europäisches Patentamt

European Patent Office

Office européen des brevets

(19)

(11) Numéro de publication: **0 112 286**

**A1**

(12) ## DEMANDE DE BREVET EUROPEEN

(21) Numéro de dépôt: **83810533.6**

(22) Date de dépôt: **17.11.83**

(51) Int. Cl.³: **G 02 F 1/137**

(30) Priorité: **23.11.82 CH 6812/82**

(43) Date de publication de la demande:
**27.06.84 Bulletin 84/26**

(84) Etats contractants désignés:
**DE FR GB**

(71) Demandeur: **ASULAB S.A.**
**Faubourg du Lac 6**
**CH-2501 Bienne(CH)**

(72) Inventeur: **Gharadjedaghi, Fereydoun**
**1 bis, rue Casteja**
**F-92100 Boulogne - Billancourt(FR)**

(74) Mandataire: **Gresset, Jean et al,**
**ASUAG Département Brevets et Licences Faubourg du Lac 6**
**CH-2501 Bienne(CH)**

(54) **Cellule d'affichage à cristaux liquides.**

(57) Cellule d'affichage comportant un mélange de cristaux liquides et de molécules pléochroïques, et un polariseur.

Le mélange a une structure en hélice dont l'angle de rotation est supérieur à 90°. Ce résultat est obtenu par l'action conjuguée d'un composé chiralique ajouté au mélange et des couches d'alignement que portent les faces internes des plaques de la cellule.

La transmission d'une telle cellule est plus sensible à la tension, spécialement dans le voisinage du seuil.

Fig.3

EP 0 112 286 A1

Cas 301 EP

CL/cb/g

## CELLULE D'AFFICHAGE A CRISTAUX LIQUIDES

La présente invention a pour objet une cellule d'affichage utilisant un mélange de cristaux liquides à anisotropie diélectrique positive et de molécules pléochroïques, et dont les deux plaques portent, sur leurs faces internes, des couches d'alignement planaire homogène.

Deux formes de réalisation d'une cellule de ce type ont été décrites par T. Uchida et al. (7.th. International Liquid Crystal Conference - Bordeaux 1978). Des détails sur leur structure et leur fonctionnement seront donnés plus loin.

Dans la première forme de réalisation, les couches d'alignement ont des directions d'orientation parallèles. De la sorte, en l'absence de champ, les molécules sont orientées parallèlement les unes aux autres dans toute l'épaisseur du mélange. Cette cellule a l'inconvénient de nécessiter une tension de commande relativement élevée.

Dans la deuxième forme de réalisation de la cellule ci-dessus, les couches d'alignement sont orientées perpendiculairement l'une à l'autre, ce qui induit une structure en hélice. Cette cellule nécessite une tension de commande notablement inférieure à la première, mais l'effet électro-optique obtenu pour des tensions d'excitation voisines de celle à partir de laquelle la transmission varie, appelée tension de seuil, est insuffisant pour permettre une commande multiplexée de taux supérieur à 2.

La présente invention a principalement pour but d'obtenir un effet électro-optique supérieur, dans une cellule de ce type, pour une tension voisine du seuil et de permettre ainsi des taux de multiplexage plus élevés.

Ce but est atteint par l'adjonction au mélange d'un composé chiralique en concentration telle qu'il induit, en conjonction avec les couches d'alignement, une structure en hélice dont l'angle de rotation, d'une couche à l'autre, est supérieur à 90°.

Les avantages et les caractéristiques de l'invention seront mieux compris à la lecture de la description qui va suivre, description faite en référence aux dessins annexés dans lesquels:

- la figure 1 représente une vue en élévation d'une cellule d'affichage selon l'état de la technique;

- la figure 2 est une vue en élévation d'une cellule d'affichage selon l'invention;

- la figure 3 est un diagramme représentant l'évolution de la transmission, exprimée en %, des cellules des figures 1 et 2 en fonction du rapport de la tension d'excitation (V) à la tension de seuil $(V_{th})$, pour plusieurs angles de rotation de l'hélice.

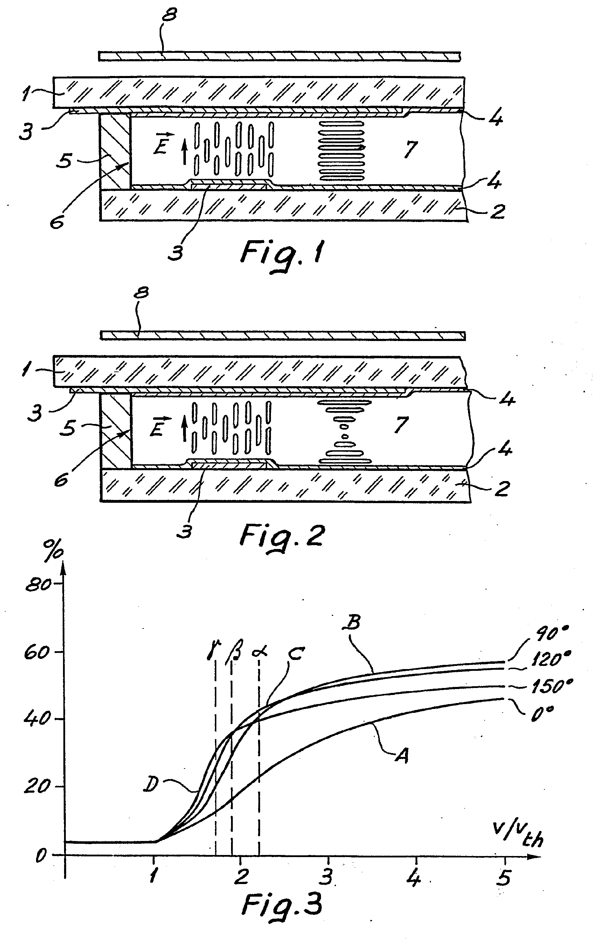

La cellule d'affichage représentée à la figure 1, correspondant au premier mode de réalisation décrit par Uchida et al., comprend deux plaques de verre 1 et 2 sensiblement parallèles l'une à l'autre. Leurs faces intérieures portent des pistes conductrices 3 formant des motifs qui peuvent être affichés. Ces faces, ainsi que les pistes 3, sont recouvertes chacune d'une couche d'alignement planaire homogène 4. Les directions d'alignement des couches sont parallèles entre elles. Un cadre 5, intercalé entre les plaques 1 et 2, définit avec celles-ci une enceinte étanche 6. Un mélange 7 de cristaux liquides et de molécules pléochroïques est enfermé dans l'enceinte 6. Ce mélange peut être le produit vendu par la maison Merck (RFA) sous l'appellation ZLI 1841 ou encore le produit vendu par la maison BDH (GB) sous l'appellation E8, associé à des molécules pléochroïques telles que celles décrites dans la demande anglaise 2.061.994. Un polariseur 8, adjacent à la plaque 1, a son axe de polarisation parallèle aux directions d'alignement des couches 4.

La cellule d'affichage est commandée au moyen d'un circuit électronique, non représenté aux dessins, qui applique des signaux électriques sur les pistes conductrices 3. Le champ $\vec{E}$ résultant induit dans le mélange 7 une orientation générale des molécules qui est sensiblement perpendiculaire aux plaques. Au contraire, dans les plages non soumises au champ électrique, les molécules de cristal liquide sont parallèles aux plaques dans toute l'épaisseur du mélange 7 à cause des couches d'alignement 4.

Ainsi, les plages non soumises au champ apparaissent sombres, car une première composante de la lumière est absorbée par le polariseur 8, alors que la deuxième composante est absorbée par les molécules pléochroïques du mélange 7. Par contre, dans les plages soumises au champ, à cause de l'orientation des molécules perpendiculaire aux plaques, seule l'une des composantes de la lumière est absorbée par le polariseur 8. Les informations sont donc affichées en clair sur fond sombre.

La courbe A de la figure 3 représente la variation de la transmission d'une cellule de ce type en fonction du rapport $V/V_{th}$.

La deuxième forme de réalisation de la cellule décrite par T. Uchida et al. diffère de celle de la figure 1 en ce que les couches 4 ont leur direction d'alignement perpendiculaire l'une à l'autre. De la sorte, en l'absence de champ, les molécules du mélange 7 sont alignées parallèlement aux plaques sur toute l'épaisseur et forment une structure en hélice dont l'angle de rotation entre les deux couches d'alignement est de 90°.

L'application d'un champ électrique sur les électrodes de commande 3 a, ici aussi, pour effet d'induire une orientation des molécules sensiblement perpendiculaire aux plaques, ce qui rend la couche transparente en ces endroits-là. Dans les zones non soumises à un champ électrique, une première composante de la lumière incidente est absorbée par le polariseur 8, tandis que l'autre composante tourne de 90° dans le mélange, tout en étant absorbée par les molécules pléochroïques qu'il comprend. Le résultat pratique est le même que précédemment, à savoir un affichage en clair sur fond sombre.

La variation de la transmission de cette cellule en fonction du rapport $V/V_{th}$ est représentée par la courbe B de la figure 3. On y constate que, dès que la tension dépasse la tension de seuil $V_{th}$, la transmission croît beaucoup plus rapidement et atteint une valeur sensiblement plus grande que celle qui peut être obtenue avec la première cellule décrite. Cette augmentation de la transmission dans les plages soumises à un champ permet d'améliorer le contraste, et par là, la lisibilité de la cellule.

Uchida et al. expliquent cette amélioration par le fait que les couches de mélange proches des plaques ne s'orientent que très partiellement sous l'effet du champ électrique. Il en résulte une absorption résiduelle qui, lorsque la structure de la couche est planaire homogène, est le double de celle d'une cellule à structure en hélice tournant de 90°. Dans ce dernier cas, seule la couche voisine de la plaque adjacente au polariseur absorbe une partie de la composante que celui-ci laisse passer. La couche voisine de l'autre plaque absorbe la lumière de la composante déjà absorbée par le polariseur. Comme l'absorption de ce dernier est très élevée, l'effet de cette deuxième couche est négligeable.

Si cette théorie était applicable pour toute la plage de tension supérieure à la tension de seuil, la cellule dont l'hélice tourne de 90° devrait avoir, dans tous les cas, la transmission maximum.

Or, la présente invention est liée à la constatation que, pour les tensions voisines du seuil, une augmentation de l'angle de rotation de l'hélice génère un effet électro-optique supérieur, c'est-à-dire une transmission encore plus élevée que celle obtenue avec la cellule dont l'hélice tourne de 90°. Cette constatation permet d'augmenter encore la transmission des cellules travaillant à une faible valeur de rapport $V/V_{th}$, ce qui est nécessairement le cas lorsque la commande est multiplexée.

Une cellule conforme à l'invention est représentée à la figure 2 qui utilise les mêmes numéros de référence que la figure 1. Cette cellule diffère des deux cellules précédemment décrites uniquement par le fait que l'hélice tourne de plus de 90°. Cet angle de rotation ne pouvant être obtenu par la seule orientation relative des couches d'alignement, il est nécessaire d'ajouter au mélange un composé chiralique, par exemple le produit vendu par la maison BDH (Grande-Bretagne) sous le nom de CB15. Ce composé a pour effet d'induire une structure en hélice dont le pas intrinsèque $P_0$ est d'autant plus petit que la concentration est forte. La relation entre le pas de l'hélice et la concentration en composé chiralique est donnée par la formule suivante, valable seulement en l'absence de contrainte et pour de faibles concentrations:

$$\frac{1}{P_0} = m\,c$$

dans laquelle   m   = constante fonction du mélange du composé chiralique et des cristaux liquides nématiques. (0,0792 lorsque le composé chiralique CB15 est associé au premier mélange décrit, 0,0645 lorsqu'il est associé au second)

          c   = concentration en composé chiralique, exprimé en % pondéral

    $P_0$ = pas de l'hélice exprimé en $\mu$m

La relation entre le pas $P_0$ et un angle $\phi_0$, appelé angle de rotation intrinsèque qui est l'angle de rotation du mélange au travers d'une couche d'épaisseur d, dans un milieu sans contrainte, est donnée par la formule:

$$\phi_0 = \frac{d}{P_0} \cdot 360 \qquad (\phi_0 \text{ exprimé en degrés})$$

On a donc la relation:

$$\phi_0 = 360° \, d\, m\, c$$

Pour réaliser une cellule d'affichage dont l'angle de rotation $\phi$ de l'hélice dépasse 90°, il faut tout d'abord que les axes des couches d'alignement 4 forment entre eux l'angle $\phi$ désiré. Si on

remplissait la cellule avec un mélange ne comportant pas de composé chiralique, on obtiendrait une structure en hélice dont l'angle de rotation serait non pas de $\phi$ comme souhaité, mais de son supplément 180° - $\phi$, l'hélice tournant dans le sens opposé. Ceci s'explique par le fait que le mélange s'oriente de manière à ce que l'énergie du système soit minimum. En conséquence, pour que l'angle de rotation de l'hélice soit $\phi$ et non pas 180° - $\phi$, il faut ajouter au mélange un composé chiralique en une concentration correspondant à un angle de rotation $\phi_0$, pour une épaisseur d égale à celle de la couche du mélange dans la cellule, compris entre $\phi$ - 90° et $\phi$ + 90°.

Ainsi, pour obtenir une rotation de 120°, les axes des couches d'alignement doivent former un angle de 120° et la concentration c du composé chiralique doit être calculée pour obtenir un angle $\phi_0$ compris entre 120° - 90°, soit 30°, et 120° + 90°, soit 210°. De la même manière, pour obtenir une rotation de 150°, les axes des couches doivent former un angle de 150° et l'angle $\phi_0$ doit être compris entre 60° et 240°.

La règle peut donc être exprimée par la double inégalité:

$$\phi - 90° < \phi_0 < \phi + 90°.$$

En pratique, étant donné que l'adjonction d'un composé chiralique risque d'altérer les propriétés du mélange, la concentration c de ce composé devrait être aussi faible que possible et donc correspondre à une valeur de $\phi_0$ aussi proche que possible de la limite inférieure $\phi$ - 90°. Toutefois, comme une valeur de $\phi_0$ même légèrement inférieure à cette limite ne permettrait pas d'obtenir l'angle $\phi$ désiré, la sécurité impose que $\phi_0$ soit légèrement supérieur à $\phi$ - 90°.

8

Avantageusement, la concentration c est donc choisie pour que l'on ait:

$$\emptyset - 85° < \emptyset_0 < \emptyset - 50°.$$

Les courbes C et D de la figure 3 représentent la variation de la transmission en fonction du rapport $V/V_{th}$ pour des cellules dont l'angle de rotation vaut respectivement 120° et 150°. Les droites $\alpha$, $\beta$ et $\gamma$ correspondent respectivement aux valeurs de $V/V_{th}$ 2,2, 1,9 et 1,7 spécifiques à des cellules multiplexées selon un schéma de multiplexage correspondant à une sélection d'amplitude 3:1, pour un taux égal à 2, 3 et 4.

Le tableau 1 est un récapitulatif de la valeur de la transmission de cellules dont les angles de rotation de l'hélice sont compris entre 0° et 150°, à différents niveaux de rapport $V/V_{th}$. La concentration en molécules pléochroïques de chacunes de ces cellules a été choisie de telle sorte que la transmission en l'absence de champ soit égale pour toutes.

Le mélange utilisé est constitué des produits E8 et CB15 associés à des molécules pléochroïques telles que décrites dans la demande de brevet anglaise 2.061.994. Les mesures ont été effectuées avec des cellules dont l'épaisseur de la couche du mélange est de 10 µm, pour une longueur d'onde de 639 nm.

| $\phi$ | 0° | 30° | 60° | 90° | 120° | 150° | $V/V_{th}$ |
|---|---|---|---|---|---|---|---|
| taux de multiplexage | | | | | | | |
| 1 | 35% | 39% | 43% | <u>51%</u> | 50% | 45% | 3 |
| 2 | 24% | 26% | 37% | 41% | <u>42%</u> | 40% | 2,2 |
| 3 | 17% | 18% | 22% | 31% | <u>36%</u> | <u>36%</u> | 1,9 |
| 4 | 13% | 14% | 17% | 22% | 28% | <u>32%</u> | 1,7 |

tableau 1

On constate sur ce tableau, ainsi que sur la figure 3, que les cellules dont l'angle de rotation est inférieur à 90° ont une transmission plus faible que celles dont l'angle de rotation est égal à 90°, pour toutes les tensions supérieures au seuil. Ceci corrobore les hypothèses de Uchida et al.

La situation se modifie complètement pour des angles de rotation de l'hélice qui dépassent 90°. On remarque sur la figure 3 que les courbes B, C et D se coupent; cela signifie que l'angle de rotation optimum varie en fonction du rapport $V/V_{th}$. Ainsi, pour des valeurs élevées de ce rapport, la transmission optimum est obtenue avec la cellule dont l'angle de rotation est égal à 90°. Ces conditions de fonctionnement sont avantageuses dans les applications où le contraste doit être maximum, sans trop se préoccuper de l'énergie consommée. C'est le cas d'une cellule dont la tension d'alimentation est 3 fois plus grande que la tension de seuil par exemple. Cette condition de fonctionnement correspond à la première ligne du tableau 1.

Lorsque la cellule est utilisée dans des appareils portatifs miniaturisés, la tension d'alimentation est limitée, notamment par la consommation maximum admissible. Le rapport $V/V_{th}$ peut être compris par exemple entre 2 et 2,5. Dans cette plage, la transmission la plus favorable est obtenue avec une cellule dont l'angle de rotation a une valeur voisine de 120° (ligne 2 du tableau 1 et courbe C de la figure 3).

Dans une cellule à commande multiplexée, la tension appliquée dans les plages dont le motif doit être affiché ne peut pas être choisie arbitrairement, car la tension n'est pas nulle entre les électrodes qui définissent les plages dont le motif ne doit pas être affiché. Le rapport entre les tensions associées aux plages affichées et non affichées est une valeur qui dépend du taux de multiplexage. Pour un schéma de multiplexage correspondant à une sélection d'amplitude 3:1 ce rapport est égal à 2,2 pour un taux de multiplexage égal à deux, 1,9 pour un taux égal à trois, etc. Pour que les motifs non affichés ne soient pas perceptibles, il faut que la transmission dans ces plages soit la même que dans la partie de la cellule qui n'est pas soumise à un champ électrique. Cette condition est remplie tant que la tension associée aux plages non affichées est inférieure à la tension de seuil. Dans la pratique, on s'en approche le plus possible afin d'avoir la transmission maximum dans les plages dont le motif est affiché. Il en résulte que dans une cellule dont la commande a un taux de multiplexage égal à deux, les plages dont le motif doit être affiché sont soumises à une tension qui est au maximum 2,2 fois la tension de seuil, ce qui correspond à la droite $\alpha$ de la figure 3. Une telle cellule aura une transmission optimum pour un angle de rotation de l'hélice compris entre 90° et 120° (2ème ligne du tableau 1).

Lorsque le taux de multiplexage est égal à 3, les plages dont le motif doit être affiché sont soumises à une tension qui ne peut dépasser 1,9 fois la tension de seuil (droite β, figure 3; 3ème ligne du tableau 1). Dans ce cas, l'optimum est situé entre 120° et 150°.

Si le taux de multiplexage est égal à 4, le rapport des tensions ne peut dépasser 1,7. La transmission optimum est alors obtenue avec une cellule dont l'angle de rotation de l'hélice est de l'ordre de 150°.

Les valeurs, obtenues dans les conditions précédemment décrites, varient sensiblement lorsqu'on modifie l'un ou l'autre paramètre de la cellule. On a toutefois constaté que dans la plupart des combinaisons actuellement envisageables, et pour un rapport $V/V_{th}$ sensiblement égal ou inférieur à 2,5, l'angle de rotation optimum est généralement inférieur à 150°. De même, lorsque le rapport $V/V_{th}$ est sensiblement égal ou inférieur à 2, l'angle de rotation optimum est compris entre 120° et 180°.

Il faut relever que le taux de multiplexage est limité par le fait que plus il est élevé plus la transmission diminue. Dans l'exemple précédemment décrit, une cellule dont le taux de multiplexage dépasserait 4 aurait une transmission insuffisante pour permettre une lecture normale des informations.

On a, de plus, constaté des irrégularités de structure dans des cellules dont l'angle de rotation de l'hélice dépasse 180°, ce qui rend la cellule inesthétique.

Il a été jusqu'ici exclusivement question de cellules travaillant en transmission. Il va de soi que les avantages obtenus pour ce type de cellules se retrouvent entièrement dans des cellules travaillant en réflexion, c'est-à-dire comportant un réflecteur, associé ou non au polariseur, et placé à l'arrière de la plaque 2.

REVENDICATIONS

1. Cellule d'affichage à cristaux liquides comprenant:

- deux plaques sensiblement parallèles l'une à l'autre;

- un cadre formant une enceinte avec lesdites plaques;

- des électrodes de commande disposées sur les faces intérieures desdites plaques;

- une couche d'un mélange de cristaux liquides à anisotropie diélectrique positive et de molécules pléochroïques, enfermée dans ladite enceinte et dont le comportement optique varie lorsqu'une tension supérieure à une valeur limite, appelée tension de seuil, est appliquée entre lesdites électrodes;

- des couches d'alignement planaire homogène définissant des directions d'orientation qui font entre elles un angle déterminé $\phi$, lesdites couches recouvrant lesdites faces intérieures et lesdites électrodes; et

- un polariseur adjacent à l'une des plaques;

caractérisée en ce que ledit angle $\phi$ est supérieur à 90° et en ce que le mélange comporte un composé chiralique dont la concentration définit un angle de rotation intrinsèque $\phi_0$ compris entre $\phi - 90°$ et $\phi + 90°$, de manière que l'action conjuguée du composé chiralique et des couches d'alignement confère au mélange une structure en hélice dont l'angle de rotation est égal à $\phi$.

2. Cellule selon la revendication 1 caractérisée en ce que la concentration en composé chiralique définit un angle de rotation intrinsèque $\phi_0$ compris entre $\phi - 85°$ et $\phi - 50°$.

3. Cellule selon la revendication 1, dans laquelle la tension d'excitation est inférieure ou sensiblement égale à 2,5 fois la tension de seuil, caractérisée en ce que l'angle de rotation de l'hélice est inférieur ou égal à 150°.

4. Cellule selon la revendication 1, dans laquelle la tension d'excitation est inférieure ou sensiblement égale à 2 fois la tension de seuil, caractérisée en ce l'angle de rotation de l'hélice est compris entre 120° et 180°.

Fig. 1

Fig. 2

Fig. 3

# RAPPORT DE RECHERCHE EUROPEENNE

Office européen
des brevets

EP   83 81 0533

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-4 272 162  (S. TOGASHI et al.) <br> * En entier * | 1,2 | G 02 F   1/137 |
| Y | PROCEEDINGS OF THE 10th CONFERENCE ON SOLID STATE DEVICES, Tokyo, 1978, JAPANESE JOURNAL OF APPLIED PHYSICS, vol. 18, supplement 18-1, 1979, pages 419-425, JP <br> T. UCHIDA et al.: "The character- istics  of the new display device using  the  depolarization  of  a liquid  crystal  (DTN-cell)"  * Paragraphes 1,2,3.1 * | 1,2 | |
| A | FR-A-2 356 173  (GENERAL ELECTRIC) <br> * En entier * | 1,3,4 | |
| A | US-A-4 257 682  (T. SUZUKI et al.) <br> * Revendications 1-5 * | 1,3,4 | DOMAINES TECHNIQUES RECHERCHES (Int. Cl. ³) <br><br> G 02 F   1/00 |
| A | FR-A-2 416 519  (EBAUCHES) <br> * Revendication 1 * | 1 | |
| | ---     -/- | | |

Le présent rapport de recherche a été établi pour toutes les revendications

| Lieu de la recherche | Date d'achèvement de la recherche | Examinateur |
|---|---|---|
| LA HAYE | 27-02-1984 | ASSI G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03. 82

Office européen

des brevets

**RAPPORT DE RECHERCHE EUROPEENNE**

EP 83 81 0533

| | | | |
|---|---|---|---|
| **DOCUMENTS CONSIDERES COMME PERTINENTS** | | | Page 2 |
| Catégorie | Citation du document avec indication, en cas de besoin, des parties pertinentes | Revendication concernée | CLASSEMENT DE LA DEMANDE (Int. Cl. ³) |
| A | SOLID STATE DEVICES, 7th EUROPEAN SOLID STATE DEVICE RESEARCH CONFERENCE, 12-15 septembre 1977, pages 65-86, Brighton, E.A. Ash, GB T.J. SCHEFFER: "Electrically controlled colour filters using liquid crystals" * Page 78, paragraphe 4.3 * | 1 | |
| A | US-A-3 915 554 (S. MAEZAWA) * Colonne 2, lignes 55-68; colonne 3, lignes 1-2; figure 1 * | 1,3,4 | |
| A | DE-A-2 658 568 (SHARP K.K.) * Page 8, lignes 22-34; page 14, lignes 25-35; page 15, lignes 1-12 * | 1,3,4 | |
| | ----- | | **DOMAINES TECHNIQUES RECHERCHES (Int. Cl. ³)** |
| Le présent rapport de recherche a été établi pour toutes les revendications | | | |

| Lieu de la recherche | Date d'achèvement de la recherche | Examinateur |
|---|---|---|
| LA HAYE | 27-02-1984 | ASSI G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82